# EUROPEAN PATENT APPLICATION

(11) **EP 4 557 567 A1**
(43) Date of publication of application: **21.05.2025**
(21) Application number: 24213036.7
(22) Date of filing: 14.11.2024
(51) Int. Cl.: H02J 7/00, B60L 58/20, H02J 1/00

(54) **ELECTRICAL MODULE AND RELATED METHODS**

(30) Priority: 14.11.2023 US 202318508572
(71) Applicant: Aptiv Technologies AG, 8200 Schaffhausen (CH)
(72) Inventor: ELGHRAWI, Mohamad, 8200 Schaffhausen (CH); AWASTHY, Arush, 8200 Schaffhausen (CH); COX, Patrick, 8200 Schaffhausen (CH)
(74) Representative: Bardehle Pagenberg Partnerschaft mbB Patentanwälte Rechtsanwälte

(57) **Abstract**

An electrical module (10) is configured for connection with a first battery (12), a second battery (14), and an external electrical device (18a, 18b). The electrical module (10) includes a first switch (40a), a second switch (40b), and a controller (30) electrically connected to the first switch (40a) and the second switch (40b). The controller (30) is configured to determine at least one of a power requirement of, or an electrical load drawn by, the external electrical device (18a, 18b). In response to determining the at least one of the power requirement of, or the electrical load drawn by, the external electrical device (18a, 18b), the controller (30) is configured to determine (i) a first power loss associated with the first battery (12) and (ii) a second power loss associated with the second battery (14). The controller (30) is configured to automatically select the first battery (12) to supply electrical current to the external electrical device (18a, 18b) based on the first power loss being less than the second power loss.

## Description

### FIELD

The present disclosure relates to electrical modules and more particularly to universal serial bus (USB) electrical modules and related methods that may be used in connection with vehicles.

### BACKGROUND

Electronic devices often rely on multiple power sources, such as batteries, to ensure uninterrupted operation. Systems communicating with such devices may select an appropriate power source based on characteristics of the power source or the device. For example, some systems select an appropriate power source based on the health or other status of the power sources that are available to the device. In particular, as the health of one power source changes or deteriorates, the system may select another power source to provide power to the device. While known systems for selecting an appropriate power source for an electronic device have proven acceptable for their intended purpose, a continuous need for improvement remains in the pertinent art.

The background description provided here is for the purpose of generally presenting the context of the disclosure. Work of the presently named inventors, to the extent it is described in this background section, as well as aspects of the description that may not otherwise qualify as prior art at the time of filing, are neither expressly nor impliedly admitted as prior art against the present disclosure.

### SUMMARY

One aspect of the disclosure provides an electrical module configured for connection with a first battery having a first output voltage, a second battery having a second output voltage that is different than the first output voltage, and an external electrical device. The electrical module includes a first switch, a second switch, and a controller electrically connected to the first switch and the second switch. The controller is configured to determine at least one of a power requirement of, or an electrical load drawn by, the external electrical device. In response to determining the at least one of the power requirement of, or the electrical load drawn by, the external electrical device, the controller is configured to determine (i) a first power loss associated with the first battery and (ii) a second power loss associated with the second battery. The controller is configured to automatically select the first battery to supply electrical current to the external electrical device based on the first power loss being less than the second power loss.

In other features, the electrical module includes a third switch electrically connected with the controller. The controller may be configured to control the third switch. The electrical module may be configured for connection with a third battery. The third battery may include a third output voltage. The third output voltage may be greater than the first output voltage. The third output voltage may be less than the second output voltage. The third battery may be configured to supply electrical current to the external electrical device in accordance with the third switch being in a closed state, the first switch being in an open state, and the second switch being in an open state.

In other features, the first output voltage includes 12 V. The second output voltage may include 48 V. The third output voltage may include 24 V. In other features, the electrical module may include a first diode electrically connected with the first switch and a second diode electrically connected with the second switch. The first diode may be disposed between the first battery and the first switch, and the second diode may be disposed between the second battery and the second switch.

In other features, the electrical module includes a battery protection circuit electrically connected with the first battery, the second battery, the first switch, the second switch, and the external electrical device. The battery protection circuit may be configured to protect at least one of the first battery, the second battery, or the external electrical device from an overcurrent condition.

In other features, the electrical module may be configured for connection with a plurality of external electrical devices. The first battery and the second battery may be configured to supply electrical current to the plurality of external electrical devices. In other features, the electrical module may be associated with a universal serial bus (USB) module. In other features, the electrical module may include a USB port electrically connected with the controller, the first switch, the second switch, the first battery, and the second battery. The external electrical device may be configured for detachable connection with the USB port.

In other features, the electrical module may include an additional USB port electrically connected with the controller, the first switch, the second switch, the first battery, and the second battery. An additional external electrical device may be configured for detachable connection with the additional USB port.

Another aspect of the disclosure provides a vehicle. The vehicle includes the electrical module, the first battery, the second battery, and a third battery.

Yet another aspect of the disclosure provides a method of operating an electric module. The electric module is configured for connection with a first battery having a first output voltage, a second battery having a second output voltage that is different than the first output voltage, and an external electrical device. The electrical module includes a first switch, a second switch, and a controller electrically connected to the first switch and the second switch. The method comprises determining, via the controller, at least one of a power requirement of, or an electrical load drawn by, an external electrical device connected to the electric module. The method further comprises, in response to determining the at least one of a power requirement of, or an electrical load drawn by, the external electrical device, determining, via the controller, (i) a first power loss associated with the first battery and (ii) a second power loss associated with the second battery. The method also comprises automatically selecting, via the controller, the first battery to supply electrical current to the external electrical device based on the first power loss being less than the second power loss.

In other features, the method further comprises supplying, via the first battery, electrical current to the external electrical device based on the first power loss being less than the second power loss.

In other features, the electrical module includes a third switch electrically connected to the controller. The electric module may be configured for connection with a third battery having a third output voltage that is greater than the first output voltage and less than the second output voltage. The first output voltage may be 12 V. The second output voltage may be 48 V. The third output voltage may be 24 V.

In other features, the electrical module includes a first diode electrically connected with the first switch and disposed between the first battery and the first switch. The electrical module may further include a second diode electrically connected with the second switch and disposed between the second battery and the second switch.

In other features, the electrical module includes a battery protection circuit electrically connected with the first battery, the second battery, the first switch, the second switch, and the external electrical device. The method may further comprise protecting, with the battery protection circuit, at least one of the first battery, the second battery, or the external electrical device from an overcurrent condition.

In other features, the method further comprises supplying electrical current to a plurality of external electrical devices connected to the electrical module.

In other features, the electrical module is associated with a universal serial bus (USB) module. The electrical module may include a USB port electrically connected with the controller, the first switch, the second switch, the first battery, and the second battery. The USB port may be configured for detachable connection with the external electrical device. The electrical module may include an additional USB port electrically connected with the controller, the first switch, the second switch, the first battery, and the second battery. The additional USB port may be configured for detachable connection with an additional external electrical device.

Further areas of applicability of the present disclosure will become apparent from the detailed description, the claims, and the drawings. The detailed description and specific examples are intended for purposes of illustration only and are not intended to limit the scope of the disclosure.

### BRIEF DESCRIPTION OF THE DRAWINGS

The present disclosure will become more fully understood from the detailed description and the accompanying drawings.
FIG. 1 is a high-level schematic view of an example electrical module in accordance with the principles of the present disclosure.
FIG. 2 is a schematic view of an example electrical module in accordance with the principles of the present disclosure.
FIG. 3 is a flowchart depicting an example method for operating an electrical module in accordance with the principles of the present disclosure.

In the drawings, reference numbers may be reused to identify similar and/or identical elements.

### DETAILED DESCRIPTION

### INTRODUCTION

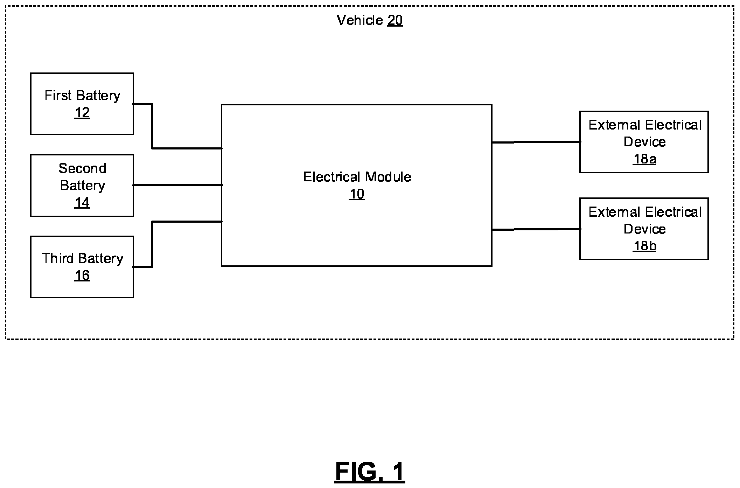

As generally illustrated in FIG. 1, an electrical module 10 may be electrically connected with a first battery 12, a second battery 14, a third battery 16, an external electrical device 18a, and an additional electrical device 18b. The electrical module 10 may be disposed between the batteries 12, 14, 16 and the external electrical devices 18a, 18b. In some implementations, the electrical module 10 is configured for detachable connection with the first battery 12, the second battery 14, the third battery 16, the electrical device 18a, and the external electrical device 18b. While the electrical module 10 is generally shown and described herein as being connected with three batteries 12, 14, 16 and two electrical devices 18a, 18b, it will be appreciated that the electrical module 10 may be connected with more or less than three batteries 12, 14, 16 and/or more or less than two external electrical devices 18a, 18b within the scope of the present disclosure. For example, the electrical module 10 may be connected with one electrical device or three electrical devices.

In various implementations, the electrical module 10 is configured to facilitate supply of electrical current from the first battery 12, the second battery 14, and/or the third battery 16 to the external device 18a and/or the additional external device 18b. As explained in more detail below, the electrical module 10 optimizes power loss associated with supplying electrical current to the external electrical device 18a and the additional external electrical device 18b. In particular, the electrical module 10 facilitates the supply of electrical current from the first battery 12, the second battery 14, and/or the third battery 16 in a most efficient manner such that power loss is minimized.

In various implementations, the electrical module 10 provides various output options to meet various power requirements of external electrical devices (for example, device 18a and device 18b). For example, the output options may include various output voltages (for example, 5 V, 9 V, 15 V, 20 V, 28V, 36 V, and/or 48 V, among others) and/or power (for example, 5 watts, 240 watts, etc.) or more, among others. In some examples, the electrical module 10 facilitates supply of 400 watts of power or more.

### VEHICLE

With continued reference to FIG. 1, the electrical module 10, the first battery 12, the second battery 14, and the third battery 16 may be incorporated with and/or disposed in a vehicle 20, but are not limited to vehicle applications. The vehicle 20 may include one or more of a variety of configurations. For example, a vehicle 20 may include a land vehicle, a passenger car, a van, a sport utility vehicle (SUV), a crossover, a truck (for example, a pickup truck, a commercial truck, etc.), a bus, a watercraft, an aircraft (for example, a plane, a helicopter, etc.), and/or a combination thereof (for example, a vehicle for land and water, a vehicle for air and water, etc.), among others.

### BATTERIES

In various implementations, the first battery 12, the second battery 14, and the third battery 16 include one or more of a variety of type. During operation of the electric module 10, the first battery 12, the second battery 14, and/or the third battery 16 may supply electrical current to one or more external electrical devices (for example, external electrical devices 18a, 18b). The first battery 12 includes a first output voltage, the second battery 14 includes a second output voltage, and the third battery 16 includes a third output voltage. In some examples, the second output voltage is greater than the first output voltage and the third output voltage. The third output voltage may be greater than the first output voltage. In some instances, the first output voltage includes 12 V, the second output voltage includes 48 V, and the third output voltage includes 24 V. In some implementations, the third battery 16 is an optional battery. The first battery 12 may operate as a default battery.

In addition to, or alternative to, the electrical module 10 being configured for connection with batteries, in some examples, the electrical module 10 may be configured for connection with one or more other power sources, such as a capacitor, a solar panel, a power converter, and/or an outlet, among others.

### EXTERNAL ELECTRICAL DEVICES

In various implementations, an external electrical device (for example, external electrical devices 18a, 18b) includes one or more of a variety of configurations. For example, an external electrical device may include an electrical device, an electronics device, a cell phone, a tablet, a computer, a laptop, a video game system, a television, an e-bike, a power tool battery, a power tool, and/or a household appliance, among others. An external electrical device receives electrical current from the first battery 12, the second battery 14, and/or the third battery 16 through the electrical module 10.

### ELECTRICAL MODULE

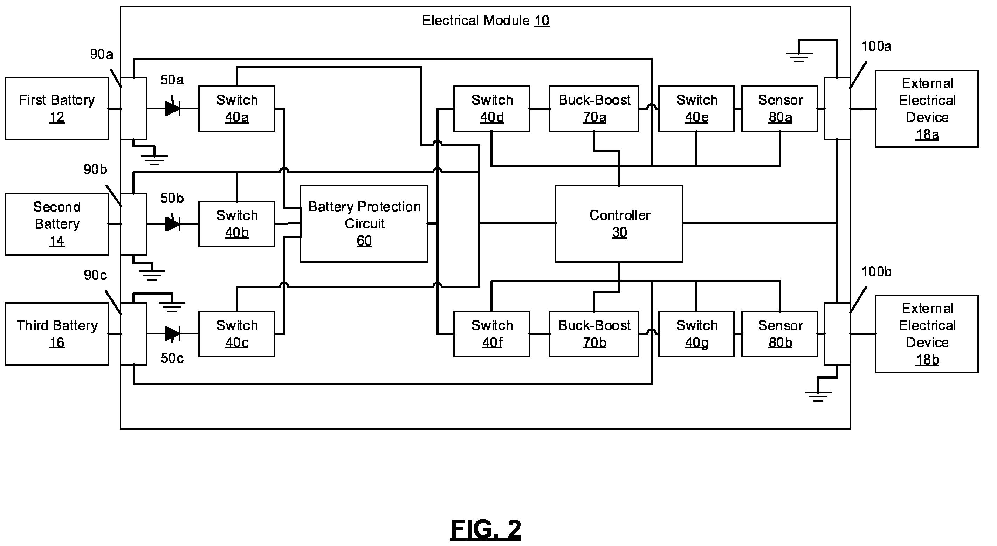

With reference to FIG. 2, the electrical module 10 may include a controller 30, a plurality of switches (for example, switches 40a-40g), a plurality of diodes (for example, diodes 50a-50c), a battery protection circuit 60, a plurality of buck-boost converters (for example, buck-boost converters 70a, 70b), a plurality of sensors (for example, sensors 80a, 80b), a plurality of battery input connections (for example, connections 90a-90c), and a plurality of outlets (for example, outlets 100a, 100b), among others. In some implementations, one or more of the outlets 100a, 100b may be USB ports. In this regard, the electrical module 10 may include, and be referred to herein, as a universal serial bus (USB) module. Similarly, the outlets 100a, 100b may include, and be referred to herein, as USB ports 100a, 100b. It will be appreciated, however, that the outlets 100a, 100b may include other forms of electrical outlets within the scope of the present disclosure.

In various implementations, the controller 30 is electrically connected with the first battery 12, the second battery 14, the third battery 16, the external electrical device 18a, the additional external electrical device 18b, each switch of the plurality of switches (for example, switches 40a-40g), each buck-boost converter of the plurality of buck-boost converters (for example, buck-boost converters 70a, 70b), each sensor of the plurality of sensors (for example, sensors 80a, 80b), each battery input connection of the plurality of battery input connections (for example, connections 90a-90c), and each USB port of the plurality of USB ports (for example, USB ports 100a, 100b), among others.

In various implementations, a first switch 40a is electrically connected with the first battery 12, a first diode 50a, the battery protection circuit 60, and a first battery input connection 90a, among others. The first battery 12 may be electrically connected with the first battery input connection 90a (for example, a plug). The first diode 50a may be disposed in series between the first switch 40a and the first battery input connection 90a.

In various implementations, a second switch 40b is electrically connected with the second battery 14, a second diode 50b, the battery protection circuit 60, and a second battery input connection 90b, among others. The second battery 14 may be electrically connected with the second battery input connection 90b (for example, a plug). The second diode 50b may be disposed in series between the second switch 40b and the second battery input connection 90b.

In various implementations, a third switch 40c is electrically connected with the third battery 16, a third diode 50c, the battery protection circuit 60, and a third battery input connection 90c, among others. The third battery 16 may be electrically connected with the third battery input connection 90c (for example, a plug). The third diode 50c may be disposed in series between the third switch 40c and the third battery input connection 90c.

In various implementations, the battery protection circuit 60 is electrically connected in parallel with the external electrical device 18a, the additional external electrical device 18b, a fourth switch 40d, a fifth switch 40e, a sixth switch 40f, a seventh switch 40g, a first buck-boost converter 70a, a second buck-boost converter 70b, a first sensor 80a, a second sensor 80b, a first USB port 100a, and a second USB port 100b, among others.

In various implementations, the external electrical device 18a is electrically connected with the first USB port 100a. The fourth switch 40d may be disposed between the battery protection circuit 60 and the first buck-boost converter 70a. The first buck-boost converter 70a may be disposed between the fourth switch 40d and the fifth switch 40e. The fifth switch 40e may be disposed between the first buck-boost converter 70a and the first sensor 80a. The first sensor 80a may be disposed between the fifth switch 40e and the first USB port 100a. In some implementations, the fourth switch 40d and/or the fifth switch 40e may be disposed internal to the first buck-boost converter 70a. In some examples, the fourth switch 40d and/or the fifth switch 40e may be optional. During operation of the electrical module 10, the controller 30 may control each buck-boost converter of the plurality of buck-boost converters (for example, buck-boost converters 70a, 70b) to turn on or off one or more switches (for example, switches 40d, 40e, 40f, 40g).

In various implementations, the additional external electrical device 18b is electrically connected with the second USB port 100b. The sixth switch 40f may be disposed between the battery protection circuit 60 and the second buck-boost converter 70b. The second buck-boost converter 70b may be disposed between the sixth switch 40f and the seventh switch 40g. The seventh switch 40g may be disposed between the second buck-boost converter 70b and the second sensor 80b. The second sensor 80b may be disposed between the seventh switch 40g and the second USB port 100b. In some implementations, the sixth switch 40f and/or the seventh switch 40g may be disposed internal to the second buck-boost converter 70b. In some examples, the sixth switch 40f and/or the seventh switch 40g may be optional.

In various implementations, the controller 30 controls each switch of the plurality of switches (for example, switches 40a-40g) and/or each buck-boost converter of the plurality of buck-boost converters (for example, buck-boost converters 70a, 70b) to provide electrical current from the first battery 12, the second battery 14, and/or the third battery 16 to the external electrical device 18a and/or the external electrical device 18b. For example, the controller 30 may selectively activate (for example, close) the first switch 40a to provide electrical current from the first battery 12 to one or more external electrical devices (for example, external electrical devices 18a, 18b), and the controller 30 may deactivate (for example, open) the first switch 40a to stop providing electrical current from the first battery 12 to the one or more external electrical devices. The controller 30 may selectively activate (for example, close) the second switch 40b to provide electrical current from the second battery 14 to one or more external electrical devices (for example, external electrical devices 18a, 18b), and the controller 30 may deactivate (for example, open) the second switch 40b to stop providing electrical current from the second battery 14 to the one or more external electrical devices. The controller 30 may selectively activate (for example, close) the third switch 40c to provide electrical current from the third battery 16 to one or more external electrical devices (for example, external electrical devices 18a, 18b), and the controller 30 may deactivate (for example, open) the third switch 40c to stop providing electrical current from the third battery 16 to the one or more external electrical devices.

In various implementations, the controller 30 includes an electronic controller and/or an electronic processor, such as a programmable microprocessor and/or microcontroller. The controller 30 may include an application specific integrated circuit (ASIC). The controller 30 may include a central processing unit (CPU), a memory (for example, a non-transitory computer-readable storage medium), and/or an input/output (I/O) interface. The controller 30 may perform various functions, including those described in greater detail herein, with appropriate programming instructions and/or code embodied in software, hardware, and/or other medium. The controller 30 may include a plurality of controllers. The controller 30 may be connected to a display, such as a touch screen.

In various implementations, each switch of the plurality of switches (for example, switches 40a-40g) may include a transistor, a field effect transistor (FET), a metal oxide semiconductor field effect transistor (MOSFET), such as n-channel or p-channel MOSFET, a bipolar junction transistor (BJT), a smart FET, and/or a silicon die (for example, bare silicon die), among others. Each switch may include a closed (for example, activated) state that may permit electrical current to flow from the first battery 12, the second battery 14, and/or the third battery 16 to one or more external electrical devices (for example, external electrical devices 18a, 18b). Each switch may include an open (for example, deactivated) state that may prevent electrical current from flowing from the first battery 12, the second battery 14, and/or the third battery 16 to the one or more external electrical devices. The electrical module 10 is shown including seven switches, however the electrical module 10 may include more or less than seven switches.

In various implementations, the first diode 50a restricts (for example, prevents) a reverse current from the first battery 12, the second diode 50b restricts (for example, prevents) a reverse current from the second battery 14, and the third diode 50c restricts (for example, prevents) a reverse current from the third battery 16. The electrical module 10 is shown including three diodes, however the electrical module 10 may include more or less than three diodes.

In various implementations, the battery protection circuit 60 may provide the first battery 12, the second battery 14, the third battery 16, the external electrical device 18a, and/or the additional external electrical device 18b with overcharging protection, over discharge protection, overcurrent protection, short circuit protection, and/or temperature monitoring, among others.

In various implementations, the first buck-boost converter 70a and the second buck-boost converter 70b step down and/or step up the first output voltage, the second output voltage, and/or the third output voltage, for example, of the first, second, and/or third batteries 12, 14, 16, respectively, to supply a stable and/or constant output voltage to the external electrical devices 18a, 18b. In particular, the first buck-boost converter 70a may be disposed in series between the switch 40d and the switch 40e to supply a stable and/or constant output voltage from the first, second, and/or third batteries 12, 14, 16 to the external electrical device 18a, while the second buck-boost converter 70b may be disposed in series between the switch 40f and the switch 40g to supply a stable and/or constant output voltage from the first, second, and/or third batteries 12, 14, 16 to the external electrical device 18b. The electrical module 10 is shown including two buck-boost converters, however the electrical module 10 may include more or less than two buck-boost converters.

In various implementations, the first sensor 80a measures one or more characteristics (for example, current) of electricity that is flowing to the external electrical device 18a. The second sensor 80b may measure one or more characteristics (for example, current) of electricity that is flowing to the additional external electrical device 18b. The electrical module 10 is shown including two sensors, however the electrical module 10 may include more or less than two sensors.

In various implementations, the first battery input connection 90a can be detachably connected with the first battery 12, the second battery input connection 90b can be detachably connected with the second battery 14, and the third battery input connection 90c can be detachably connected with the third battery 16. In some examples, the first battery input connection 90a, the second battery input connection 90b, and the third battery input connection 90c may include connector type connections. The electrical module 10 is shown including three battery input connections, however the electrical module 10 may include more or less than three battery input connections.

In various implementations, the first USB port 100a can be detachably connected with the external electrical device 18a and/or the additional electrical device 18b. The second USB port 100b can be detachably connected with the external electrical device 18a and/or the additional electrical device 18b. In some instances, the first USB port 100a and the second USB port 100b include USB Type-C ports. The electrical module 10 is shown including two USB ports, however the electrical module 10 may include more or less than two USB ports.

In some examples, the electrical module 10 permits only one battery to supply electrical current to the external electrical devices at a time. In these examples, the controller 30 may select a battery among the first battery 12, the second battery 14, and third battery 16 to supply electrical current to one or more external electrical devices 18a, 18b based on the power requirements of, and/or electrical loads drawn by, the external electrical devices to optimize power loss associated with supplying the electrical current. For example, the controller 30 may select the battery that provides the best overall efficiency and/or the least amount of power loss between the battery (for example, battery 12, battery 14, or battery 16) and the respective electrical device (for example, device 18a or device 18b) electrically connected thereto.

In some instances, the electrical loads drawn by the external electrical devices 18a, 18b are dynamic. In some instances, disparate devices having different power requirements and/or drawing different electrical loads are connected with, or disconnected from, the electrical module 10 during operation of the electrical module 10. The controller 30 may determine the power requirements of, and/or the electrical loads drawn by, the devices (for example, device 18a or device 18b) connected with the electrical module 10 in real time. In response to determining the power requirements of, and/or electrical load drawn by, the devices connected with the electrical module 10, the controller 30 may select the battery (for example, battery 12, battery 14, or battery 16) that results in the least amount of power loss and may permit the selected battery to supply electrical current to one or more of the devices (for example, device 18a or device 18b) while preventing the other batteries from supplying electrical current to the devices.

In various implementations, the controller 30 may determine the power requirements of, and/or the electrical loads drawn by, the external electrical devices (for example, device 18a or device 18b) based on electrical current measured by the sensors 80a, 80b, the output voltage of the respective battery (for example, battery 12, battery 14, or battery 16) supplying electrical current, and/or information transmitted to the controller 30 from the devices (for example, device 18a or device 18b), among others. In some examples, the controller 30 automatically switches between the batteries based on changing power requirements of, and/or electrical drawn by, the devices (for example, device 18a or device 18b) connected with the electrical module 10.

In some examples, the electrical module 10 outputs at each USB port (for example, USB ports 100a, 100b) 15 watts, 27 watts, 45 watts, 60 watts, 140 watts, 180 watts, 240 watts, and/or 400 watts, among others.

In various implementations, the controller 30 makes its battery selection based on the below table 1. For example, table 1 describes example power losses associated with voltages and currents outputted from each USB port (for example, first USB port 100a or second USB port 100b) based on the voltages supplied from the first battery 12 (for example, 12 V), the second battery 14 (for example, 48 V), and the third battery 16 (for example, 24 V).

**Table 1**

| Example Power Losses | | | | | | | | | |
|---|---|---|---|---|---|---|---|---|---|
| | | USB port Output V/A | | | | | | | |
| | | 5V/3A | 9V/3A | 15V/3A | 20V/3A | 20V/5A | 28V/5A | 36V/5A | 48V/5A |
| V Supplied from Batteries | 12 | 3.05 | 2.94 | 4.106 | 6.11 | 12.56 | 22.6 | 36.01 | 62.26 |
| | 24 | 3.89 | 3.89 | 3.83 | 3.73 | 7.44 | 9.18 | 13.6 | 22.26 |
| | 48 | 5.36 | 5.49 | 5.68 | 5.77 | 10.69 | 10.52 | 10.6 | 10.29 |

In various implementations, the controller 30 selects the battery associated with the lowest power loss for a respective output voltage and current. For instance, if an external electrical device (for example, device 18a or device 18b) requires 5V/3A or 9V/3A, the controller 30 may select the first battery 12 to supply electrical current to the external electrical device because the first battery 12 includes lower power losses (for example, 3.05 and 2.94) in comparison with power losses associated with the second battery 14 (for example, 5.36 and 5.49) and power losses associated with the third battery 16 (for example, 3.89 and 3.89).

In various implementations, if an external electrical device (for example, device 18a or device 18b) requires 15V/3A, 20V/3A, 20V/5A, or 28V/5A, the controller 30 selects the third battery 16 to supply electrical current to the external electrical device because the third battery 16 includes lower power losses (for example, 3.83, 3.73, 7.44, and 9.18) in comparison with power losses associated with the first battery 12 (for example, 4.106, 6.11, 12.56, and 22.6) and power losses associated with the second battery 14 (for example, 5.68, 5.77, 10.69, and 10.52).

In various implementations, if an external electrical device (for example, device 18a or device 18b) requires 36V/5A or 48V/5A, the controller 30 selects the second battery 14 to supply electrical current to the external electrical device because the second battery 14 includes lower power losses (for example, 10.6 and 10.29) in comparison with power losses associated with the first battery 12 (for example, 36.01 and 62.26) and power losses associated with the third battery 16 (for example, 13.6 and 22.26).

### FLOWCHART

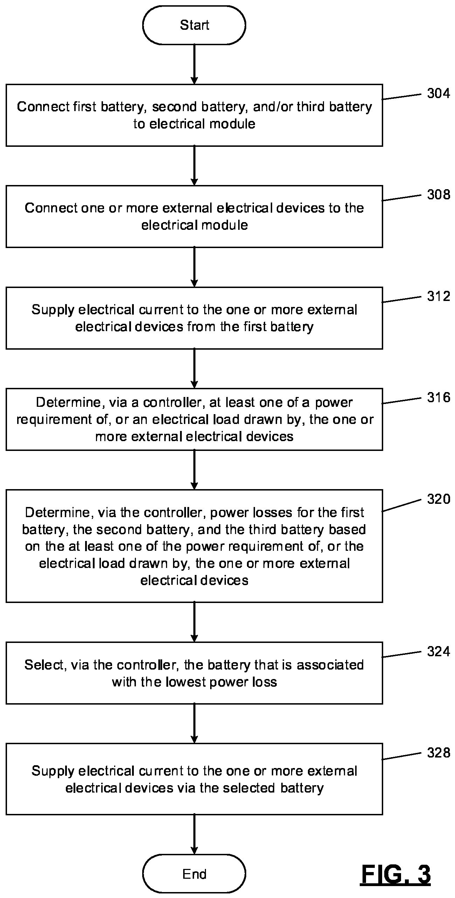

FIG. 3 is a flowchart of an example method for operating an electrical module 10. Control begins at 304. At 304, a user may connect a first battery 12, a second battery 14, and a third battery 16 to the electrical module 10. Control proceeds to 308. At 308, a user may connect one or more external electrical devices (for example, external electrical devices 18a, 18b) to the electrical module 10. Control proceeds to 312.

At 312, the electrical module 10 may facilitate supply of electrical current to the one or more external electrical devices from the first battery 12. In some examples, the first battery 12 may operate as a default battery. Control proceeds to 316. At 316, a controller 30 may determine at least one of a power requirement of, and/or an electrical load drawn by, the one or more external electrical devices. Control proceeds to 320.

At 320, the controller 30 may determine and/or calculate power losses for the first battery 12, the second battery 14, and the third battery 16 associated with supplying electrical current based on the at least one of the power requirement of, or the electrical load drawn by, the one or more electrical devices. Control proceeds to 324. At 324, the controller 30 may select the battery associated with the lowest power loss. Control proceeds to 328.

At 328, the electrical module 10 may facilitate the supply of electrical current to the one or more external electrical devices via the selected battery and may prevent the other batteries from supplying electrical current to the one or more external electrical devices. Then control ends.

### CONCLUSION

The foregoing description is merely illustrative in nature and is in no way intended to limit the disclosure, its application, or uses. The broad teachings of the disclosure can be implemented in a variety of forms. Therefore, while this disclosure includes particular examples, the true scope of the disclosure should not be so limited since other modifications will become apparent upon a study of the drawings, the specification, and the following claims. In the written description and claims, one or more steps within a method may be executed in a different order (or concurrently) without altering the principles of the present disclosure. Similarly, one or more instructions stored in a non-transitory computer-readable medium may be executed in a different order (or concurrently) without altering the principles of the present disclosure. Unless indicated otherwise, numbering or other labeling of instructions or method steps is done for convenient reference, not to indicate a fixed order.

Further, although each of the embodiments is described above as having certain features, any one or more of those features described with respect to any embodiment of the disclosure can be implemented in and/or combined with features of any of the other embodiments, even if that combination is not explicitly described. In other words, the described embodiments are not mutually exclusive, and permutations of one or more embodiments with one another remain within the scope of this disclosure.

Spatial and functional relationships between elements (for example, between modules, circuit elements, semiconductor layers, etc.) are described using various terms, including "connected," "engaged," "coupled," "adjacent," "next to," "on top of," "above," "below," and "disposed." Unless explicitly described as being "direct," when a relationship between first and second elements is described in the above disclosure, that relationship encompasses a direct relationship where no other intervening elements are present between the first and second elements as well as an indirect relationship where one or more intervening elements are present between the first and second elements.

The term "set" does not necessarily exclude the empty set - in other words, in some circumstances a "set" may have zero elements. The term "non-empty set" may be used to indicate exclusion of the empty set - in other words, a non-empty set will always have one or more elements. The term "subset" does not necessarily require a proper subset. In other words, a "subset" of a first set may be coextensive with (equal to) the first set. Further, the term "subset" does not necessarily exclude the empty set - in some circumstances a "subset" may have zero elements.

In the figures, the direction of an arrow, as indicated by the arrowhead, generally demonstrates the flow of information (such as data or instructions) that is of interest to the illustration. For example, when element A and element B exchange a variety of information but information transmitted from element A to element B is relevant to the illustration, the arrow may point from element A to element B. This unidirectional arrow does not imply that no other information is transmitted from element B to element A. Further, for information sent from element A to element B, element B may send requests for, or receipt acknowledgements of, the information to element A.

In this application, including the definitions below, the term "module" can be replaced with the term "controller" or the term "circuit." In this application, the term "controller" can be replaced with the term "module." The term "module" may refer to, be part of, or include: an Application Specific Integrated Circuit (ASIC); a digital, analog, or mixed analog/digital discrete circuit; a digital, analog, or mixed analog/digital integrated circuit; a combinational logic circuit; a field programmable gate array (FPGA); processor hardware (shared, dedicated, or group) that executes code; memory hardware (shared, dedicated, or group) that is coupled with the processor hardware and stores code executed by the processor hardware; other suitable hardware components that provide the described functionality; or a combination of some or all of the above, such as in a system-on-chip.

The module may include one or more interface circuits. In some examples, the interface circuit(s) may implement wired or wireless interfaces that connect to a local area network (LAN) or a wireless personal area network (WPAN). Examples of a LAN are Institute of Electrical and Electronics Engineers (IEEE) Standard 802.11-2020 (also known as the WIFI wireless networking standard) and IEEE Standard 802.3-2018 (also known as the ETHERNET wired networking standard). Examples of a WPAN are IEEE Standard 802.15.4 (including the ZIGBEE standard from the ZigBee Alliance) and, from the Bluetooth Special Interest Group (SIG), the BLUETOOTH wireless networking standard (including Core Specification versions 3.0, 4.0, 4.1, 4.2, 5.0, and 5.1 from the Bluetooth SIG).

The module may communicate with other modules using the interface circuit(s). Although the module may be depicted in the present disclosure as logically communicating directly with other modules, in various implementations the module may actually communicate via a communications system. The communications system includes physical and/or virtual networking equipment such as hubs, switches, routers, and gateways. In some implementations, the communications system connects to or traverses a wide area network (WAN) such as the Internet. For example, the communications system may include multiple LANs connected to each other over the Internet or point-to-point leased lines using technologies including Multiprotocol Label Switching (MPLS) and virtual private networks (VPNs).

In various implementations, the functionality of the module may be distributed among multiple modules that are connected via the communications system. For example, multiple modules may implement the same functionality distributed by a load balancing system. In a further example, the functionality of the module may be split between a server (also known as remote, or cloud) module and a client (or, user) module. For example, the client module may include a native or web application executing on a client device and in network communication with the server module.

Some or all hardware features of a module may be defined using a language for hardware description, such as IEEE Standard 1364-2005 (commonly called "Verilog") and IEEE Standard 1076-2008 (commonly called "VHDL"). The hardware description language may be used to manufacture and/or program a hardware circuit. In some implementations, some or all features of a module may be defined by a language, such as IEEE 1666-2005 (commonly called "SystemC"), that encompasses both code, as described below, and hardware description.

The term code, as used above, may include software, firmware, and/or microcode, and may refer to programs, routines, functions, classes, data structures, and/or objects. Shared processor hardware encompasses a single microprocessor that executes some or all code from multiple modules. Group processor hardware encompasses a microprocessor that, in combination with additional microprocessors, executes some or all code from one or more modules. References to multiple microprocessors encompass multiple microprocessors on discrete dies, multiple microprocessors on a single die, multiple cores of a single microprocessor, multiple threads of a single microprocessor, or a combination of the above.

The memory hardware may also store data together with or separate from the code. Shared memory hardware encompasses a single memory device that stores some or all code from multiple modules. One example of shared memory hardware may be level 1 cache on or near a microprocessor die, which may store code from multiple modules. Another example of shared memory hardware may be persistent storage, such as a solid state drive (SSD) or magnetic hard disk drive (HDD), which may store code from multiple modules. Group memory hardware encompasses a memory device that, in combination with other memory devices, stores some or all code from one or more modules. One example of group memory hardware is a storage area network (SAN), which may store code of a particular module across multiple physical devices. Another example of group memory hardware is random access memory of each of a set of servers that, in combination, store code of a particular module. The term memory hardware is a subset of the term computer-readable medium.

The apparatuses and methods described in this application may be partially or fully implemented by a special-purpose computer created by configuring a general-purpose computer to execute one or more particular functions embodied in computer programs. Such apparatuses and methods may be described as computerized or computer-implemented apparatuses and methods. The functional blocks and flowchart elements described above serve as software specifications, which can be translated into the computer programs by the routine work of a skilled technician or programmer.

The computer programs include processor-executable instructions that are stored on at least one non-transitory computer-readable medium. The computer programs may also include or rely on stored data. The computer programs may encompass a basic input/output system (BIOS) that interacts with hardware of the special-purpose computer, device drivers that interact with particular devices of the special-purpose computer, one or more operating systems, user applications, background services, background applications, etc.

The computer programs may include: (i) descriptive text to be parsed, such as HTML (hypertext markup language), XML (extensible markup language), or JSON (JavaScript Object Notation), (ii) assembly code, (iii) object code generated from source code by a compiler, (iv) source code for execution by an interpreter, (v) source code for compilation and execution by a just-in-time compiler, etc. As examples only, source code may be written using syntax from languages including C, C++, C#, Objective-C, Swift, Haskell, Go, SQL, R, Lisp, Java^{®}, Fortran, Perl, Pascal, Curl, OCaml, JavaScript^{®}, HTMI,S (Hypertext Markup Language 5th revision), Ada, ASP (Active Server Pages), PHP (PHP: Hypertext Preprocessor), Scala, Eiffel, Smalltalk, Erlang, Ruby, Flash^{®}, Visual Basic^{®}, Lua, MATLAB, SIMULINK, and Python^{®}.

The term non-transitory computer-readable medium does not encompass transitory electrical or electromagnetic signals propagating through a medium (such as on a carrier wave). Non-limiting examples of a non-transitory computer-readable medium are nonvolatile memory circuits (such as a flash memory circuit, an erasable programmable read-only memory circuit, or a mask read-only memory circuit), volatile memory circuits (such as a static random access memory circuit or a dynamic random access memory circuit), magnetic storage media (such as an analog or digital magnetic tape or a hard disk drive), and optical storage media (such as a CD, a DVD, or a Blu-ray Disc).

The phrase "at least one of A, B, and C" should be construed to mean a logical (A OR B OR C), using a non-exclusive logical OR, and should not be construed to mean "at least one of A, at least one of B, and at least one of C." The phrase "at least one of A, B, or C" should be construed to mean a logical (A OR B OR C), using a non-exclusive logical OR.

The following Clauses provide an exemplary configuration for an electric module and related methods, as described above.

Clause 1: An electrical module configured for connection with a first battery having a first output voltage, a second battery having a second output voltage that is different than the first output voltage, and an external electrical device, the electrical module comprising: a first switch; a second switch; and a controller electrically connected to the first switch and the second switch and configured to: determine at least one of a power requirement of, or an electrical load drawn by, the external electrical device; in response to determining the at least one of the power requirement of, or the electrical load drawn by, the external electrical device, determine (i) a first power loss associated with the first battery and (ii) a second power loss associated with the second battery; and automatically select the first battery to supply electrical current to the external electrical device based on the first power loss being less than the second power loss.

Clause 2: The electrical module of clause 1, further comprising: a third switch electrically connected with the controller, wherein: the controller is configured to control the third switch, the electrical module is configured for connection with a third battery, the third battery includes a third output voltage, the third output voltage is greater than the first output voltage, the third output voltage is less than the second output voltage, and the third battery is configured to supply electrical current to the external electrical device in accordance with the third switch being in a closed state, the first switch being in an open state, and the second switch being in an open state.

Clause 3: The electrical module of clause 2, wherein: the first output voltage includes 12 V; the second output voltage includes 48 V; and the third output voltage includes 24 V.

Clause 4: The electrical module of any of clauses 1 through 3, further comprising: a first diode electrically connected with the first switch; and a second diode electrically connected with the second switch, wherein: the first diode is disposed between the first battery and the first switch, and the second diode is disposed between the second battery and the second switch.

Clause 5: The electrical module of any of clauses 1 through 4, further comprising: a battery protection circuit electrically connected with the first battery, the second battery, the first switch, the second switch, and the external electrical device, wherein the battery protection circuit is configured to protect at least one of the first battery, the second battery, or the external electrical device from an overcurrent condition.

Clause 6: The electrical module of any of clauses 1 through 5, wherein: the electrical module is configured for connection with a plurality of external electrical devices; and the first battery and the second battery are configured to supply electrical current to the plurality of external electrical devices.

Clause 7: The electrical module of any of clauses 1 through 6, wherein the electrical module is associated with a universal serial bus (USB) module.

Clause 8: The electrical module of clause 7, further comprising: a USB port electrically connected with the controller, the first switch, the second switch, the first battery, and the second battery, wherein the external electrical device is configured for detachable connection with the USB port.

Clause 9: The electrical module of clause 8, further comprising: an additional USB port electrically connected with the controller, the first switch, the second switch, the first battery, and the second battery, wherein an additional external electrical device is configured for detachable connection with the additional USB port.

Clause 10: A vehicle comprising: the electrical module of any of clauses 1 through 9; the first battery; the second battery; and a third battery.

Clause 11: A method of operating an electric module configured for connection with a first battery having a first output voltage, a second battery having a second output voltage that is different than the first output voltage, and an external electrical device, the electrical module including a first switch, a second switch, and a controller electrically connected to the first switch and the second switch, the method comprising: determining, via the controller, at least one of a power requirement of, or an electrical load drawn by, an external electrical device connected to the electric module; in response to determining the at least one of a power requirement of, or an electrical load drawn by, the external electrical device, determining, via the controller, (i) a first power loss associated with the first battery and (ii) a second power loss associated with the second battery; and automatically selecting, via the controller, the first battery to supply electrical current to the external electrical device based on the first power loss being less than the second power loss.

Clause 12: The method of clause 11 further comprising supplying, via the first battery, electrical current to the external electrical device based on the first power loss being less than the second power loss.

Clause 13: The method of any of clauses 11 through 12 wherein: the electrical module includes a third switch electrically connected to the controller; and the electric module is configured for connection with a third battery having a third output voltage that is greater than the first output voltage and less than the second output voltage.

Clause 14: The method of clause 13 wherein: the first output voltage includes 12 V; the second output voltage includes 48 V; and the third output voltage includes 24 V.

Clause 15: The method of any of clauses 11 through 14 wherein: the electrical module includes a first diode electrically connected with the first switch and disposed between the first battery and the first switch; and the electrical module includes a second diode electrically connected with the second switch and disposed between the second battery and the second switch.

Clause 16: The method of any of clauses 11 through 15 wherein the electrical module includes a battery protection circuit electrically connected with the first battery, the second battery, the first switch, the second switch, and the external electrical device, and wherein the method further comprises protecting, with the battery protection circuit, at least one of the first battery, the second battery, or the external electrical device from an overcurrent condition.

Clause 17: The method of any of clauses 11 through 16 furthering comprising supplying electrical current to a plurality of external electrical devices connected to the electrical module.

Clause 18: The method of any of clauses 11 through 17 wherein the electrical module is associated with a universal serial bus (USB) module.

Clause 19: The method of clause 18 wherein: the electrical module includes a USB port electrically connected with the controller, the first switch, the second switch, the first battery, and the second battery; and the USB port is configured for detachable connection with the external electrical device.

Clause 20: The method of any of clause 19 wherein: the electrical module includes an additional USB port electrically connected with the controller, the first switch, the second switch, the first battery, and the second battery; and the additional USB port is configured for detachable connection with an additional external electrical device.

## Claims

1. An electrical module configured for connection with a first battery having a first output voltage, a second battery having a second output voltage that is different than the first output voltage, and an external electrical device, the electrical module comprising:
a first switch;
a second switch; and
a controller electrically connected to the first switch and the second switch and configured to:
determine at least one of a power requirement of, or an electrical load drawn by, the external electrical device;
in response to determining the at least one of the power requirement of, or the electrical load drawn by, the external electrical device, determine (i) a first power loss associated with the first battery and (ii) a second power loss associated with the second battery; and
automatically select the first battery to supply electrical current to the external electrical device based on the first power loss being less than the second power loss.

2. The electrical module of claim 1 further comprising:
a third switch electrically connected with the controller, wherein:
the controller is configured to control the third switch,
the electrical module is configured for connection with a third battery,
the third battery includes a third output voltage,
the third output voltage is greater than the first output voltage,
the third output voltage is less than the second output voltage, and
the third battery is configured to supply electrical current to the external electrical device in accordance with the third switch being in a closed state, the first switch being in an open state, and the second switch being in an open state.

3. The electrical module of claim 1 or 2 wherein:
the first output voltage includes 12 V;
the second output voltage includes 48 V; and
the third output voltage includes 24 V.

4. The electrical module of any one of claims 1 to 3 further comprising:
a first diode electrically connected with the first switch; and
a second diode electrically connected with the second switch, wherein:
the first diode is disposed between the first battery and the first switch, and
the second diode is disposed between the second battery and the second switch.

5. The electrical module of any one of claims 1 to 4 further comprising:
a battery protection circuit electrically connected with the first battery, the second battery, the first switch, the second switch, and the external electrical device,
wherein the battery protection circuit is configured to protect at least one of the first battery, the second battery, or the external electrical device from an overcurrent condition.

6. The electrical module of any one of claims 1 to 5 wherein:
the electrical module is configured for connection with a plurality of external electrical devices; and
the first battery and the second battery are configured to supply electrical current to the plurality of external electrical devices.

7. The electrical module of any one of claims 1 to 6 wherein the electrical module is associated with a universal serial bus (USB) module, wherein preferably the module further comprising:
a USB port electrically connected with the controller, the first switch, the second switch, the first battery, and the second battery,
wherein the external electrical device is configured for detachable connection with the USB port, wherein preferably the module further comprises:
an additional USB port electrically connected with the controller, the first switch, the second switch, the first battery, and the second battery,
wherein an additional external electrical device is configured for detachable connection with the additional USB port.

8. A vehicle comprising:
the electrical module of any one of claims 1 to 7;
the first battery;
the second battery; and
a third battery.

9. A method of operating an electric module configured for connection with a first battery having a first output voltage, a second battery having a second output voltage that is different than the first output voltage, and an external electrical device, the electrical module including a first switch, a second switch, and a controller electrically connected to the first switch and the second switch, the method comprising:
determining, via the controller, at least one of a power requirement of, or an electrical load drawn by, an external electrical device connected to the electric module;
in response to determining the at least one of a power requirement of, or an electrical load drawn by, the external electrical device, determining, via the controller, (i) a first power loss associated with the first battery and (ii) a second power loss associated with the second battery; and
automatically selecting, via the controller, the first battery to supply electrical current to the external electrical device based on the first power loss being less than the second power loss.

10. The method of claim 9 further comprising supplying, via the first battery, electrical current to the external electrical device based on the first power loss being less than the second power loss.

11. The method of claim 9 or 10 wherein:
the electrical module includes a third switch electrically connected to the controller; and
the electric module is configured for connection with a third battery having a third output voltage that is greater than the first output voltage and less than the second output voltage, wherein preferably
the first output voltage includes 12 V;
the second output voltage includes 48 V; and
the third output voltage includes 24 V.

12. The method of any one of claims 9 to 11 wherein:
the electrical module includes a first diode electrically connected with the first switch and disposed between the first battery and the first switch; and
the electrical module includes a second diode electrically connected with the second switch and disposed between the second battery and the second switch.

13. The method of any one of claims 9 to 12 wherein the electrical module includes a battery protection circuit electrically connected with the first battery, the second battery, the first switch, the second switch, and the external electrical device, and wherein the method further comprises protecting, with the battery protection circuit, at least one of the first battery, the second battery, or the external electrical device from an overcurrent condition.

14. The method of any one of claims 9 to 12 furthering comprising supplying electrical current to a plurality of external electrical devices connected to the electrical module.

15. The method of any one of claims 9 to 14 wherein the electrical module is associated with a universal serial bus (USB) module, wherein preferably:
the electrical module includes a USB port electrically connected with the controller, the first switch, the second switch, the first battery, and the second battery; and
the USB port is configured for detachable connection with the external electrical device, and wherein further preferably:
the electrical module includes an additional USB port electrically connected with the controller, the first switch, the second switch, the first battery, and the second battery; and
the additional USB port is configured for detachable connection with an additional external electrical device.
